# EUROPÄISCHE PATENTSCHRIFT

(11) **EP 0 998 781 B1**
(45) Veröffentlichungstag und Bekanntmachung des Hinweises auf die Patenterteilung: **13.11.2002**
(21) Anmeldenummer: 98945003.6
(22) Anmeldetag: 17.07.1998
(51) Int. Cl.: H02K 3/52

(54) **KLAUENPOLMOTOR**
CLAW POLE MOTOR
MOTEUR A POLES A GRIFFES

(30) Priorität: 24.07.1997 DE 29713162 U
(43) Veröffentlichungstag der Anmeldung: 10.05.2000
(73) Patentinhaber: Papst-Motoren GmbH & Co. KG, 78112 St. Georgen (DE)
(72) Erfinder: BURGBACHER, Martin, D-78112 St. Georgen (DE); JESKE, Frank, D-78112 St. Georgen (DE)
(86) Internationale Anmeldenummer: DE9802001
(87) Internationale Veröffentlichungsnummer: WO99005769

(56) Entgegenhaltungen:
- EP-A- 0 752 749
- EP-A- 0 766 370
- US-A- 5 747 908

## Beschreibung

Die Erfindung betrifft einen Klauenpolmotor und insbesondere einen elektronisch kommutierten Klauenpolmotor.

Derartige Motoren sind oft extrem klein und können z.B. einen Außendurchmesser von weniger als 2 cm haben. Sie werden bevorzugt zum Antrieb kleiner Lüfter zur direkten Kühlung des Prozessors in Computern verwendet, und da auf einer Computerplatine nur sehr begrenzt Platz vorhanden ist, strebt man nach einer geringen Bauhöhe solcher Motoren, wobei trotzdem die Funktion absolut sicher sein muss.

Ein aus der EP-A2-0 766 370 bekannter Motor hat eine relativ große Bauhöhe, weil bei ihm durch die Interaktion von Permanentmagnet des Außenrotors und Klauenpolanordnung des Innenstators ein magnetischer Zug auf den Rotor erzeugt werden muss, der eine ausreichende Anpresskraft der Welle auf das Axiallager sicherstellt. Hierzu müssen bei diesem Motor Rotor und Stator in axialer Richtung stark versetzt sein.

Ferner kennt man aus der EP-A2-0 752 749 einen elektronisch kommutierten Außenläufermotor. Dieser hat einen Innenstator mit acht ausgeprägten Polen, der auf einer Weicheisenplatte montiert ist. Aus dieser Platte sind in den Zwischenräumen zwischen den ausgeprägten Polen Blechteile herausgebogen, welche in die Nutöffnungen des Stators ragen. Sie sollen das Drehmoment des Motors verbessern und die Anpresskraft auf das Axiallager des Außenrotors erhöhen.

Es ist deshalb eine Aufgabe der Erfindung, einen neuen Klauenpolmotor bereitzustellen, insbesondere einen Kleinstmotor, wie er sich beispielsweise als Lüfterantrieb für die Kühlung von Mikroprozessoren eignet.

Nach der Erfindung wird diese Aufgabe gelöst durch die im Anspruch 1 angegebenen Maßnahmen. Man erhält so die Möglichkeit, entweder den auf den Rotor wirksamen axialen magnetischen Zug zu vergrößern, oder die Bauhöhe des Motors zu verringern, oder auch eine Kombination dieser Maßnahmen zu treffen.

Eine andere Lösung der gestellten Aufgabe ergibt sich erfindungsgemäß durch die im Anspruch 9 angegebenen Maßnahmen. Klauenpole mit unterschiedlicher axialer Erstreckung sind leicht zu realisieren. Mit ihrer Hilfe kann man sehr einfach den axialen Zug vergrößern, welcher den Rotor gegen sein Axiallager presst, oder die Bauhöhe des Motors verringern, oder auch eine Kombination dieser Maßnahmen treffen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: einen Längsschnitt durch einen Lüfter mit einem erfindungsgemäßen elektronisch kommutierten Klauenpol-Kleinstmotor, in sehr stark vergrößertem Maßstab; in der Realität kann ein solcher Motor z.B. einen Außendurchmesser von ca. 2 cm haben,
- Fig. 2: eine Abwicklung der Klauenpole der beim Motor der Fig. 1 verwendeten Klauenpolanordnung,
- Fig. 3: eine Draufsicht auf das obere Polblech 74 der Fig. 1 und 2, gesehen in Richtung des Pfeiles III der Fig. 4,
- Fig. 4: eine Seitenansicht des oberen Polblechs 74,
- Fig. 5: eine schematische Darstellung zur Erläuterung der Erzeugung einer Magnetkraft,
- Fig. 6: eine schematische Darstellung einer Einzelheit,
- Fig. 7: eine Variante zum Statoraufbau der Fig. 2,
- Fig. 8: eine elektrische Schaltung zur Kommutierung des Motors nach den vorhergehenden Figuren und des Motors nach den Fig. 12 und 13,
- Fig. 9: eine Seitenansicht des unteren Polblechs einer weiteren Ausführungsform der Erfindung,
- Fig. 10: eine Draufsicht auf das Polblech der Fig. 9, gesehen in Richtung des Pfeiles X der Fig. 9,
- Fig. 11: eine Einzelheit des Polblechs der Fig. 9 und 10, gesehen in Richtung des Pfeiles XI der Fig. 10, und in Abwicklung,
- Fig. 12: eine Darstellung eines Klauenpolmotors mit einem unteren Potblech gemäß den Figuren 9 bis 11, und
- Fig. 13: eine Einzelheit XIII der Fig. 12 in stärker vergrößerter Darstellung.

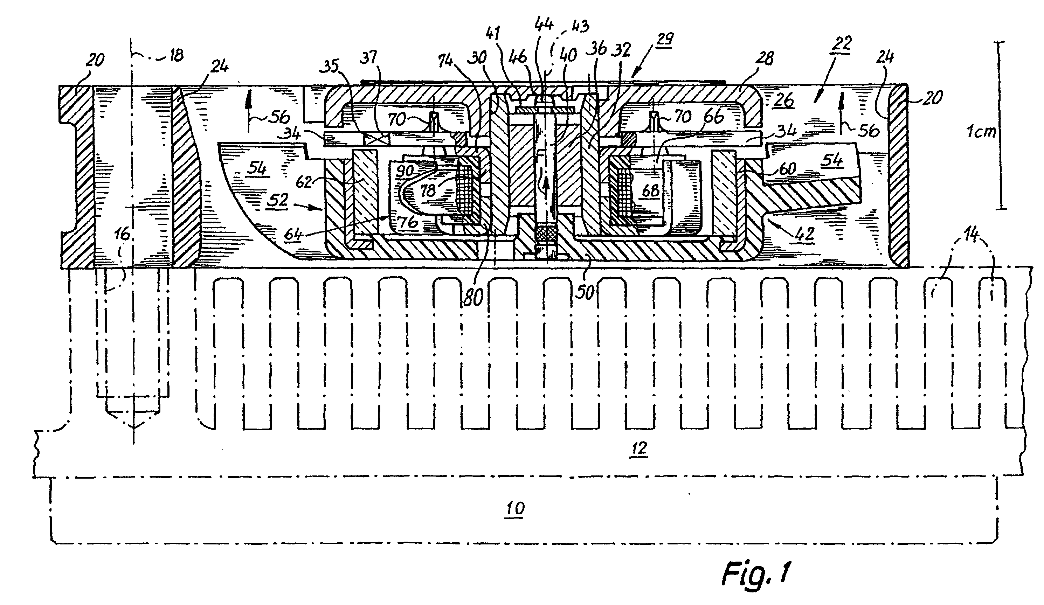

Die Erfindung findet bevorzugt Anwendung bei sehr kleinen Motoren und wird deshalb nachfolgend am Beispiel eines Lüfters zur Kühlung eines Mikroprozessors beschrieben, also eines sogenannten Prozessorlüfters. Da solche Lüfter extrem klein sind, müssen die Zeichnungen sehr stark vergrößert sein. Zum besseren Verständnis ist in Fig. 1 rechts der Maßstab für die Länge 1 cm beispielhaft angegeben, um die Größenverhältnisse zu verdeutlichen. Eine Darstellung im Maßstab 1 : 1 wäre ersichtlich nicht möglich.

Mit der Bezugszahl 10 ist ein Mikroprozessor (oder sonstiger Halbleiter) bezeichnet, der wegen seiner starken Wärmeentwicklung zwangsgekühlt werden muß. Auf ihm ist in der üblichen Weise ein Kühlkörper 12 aus Metall wärmeleitend befestigt. Dieser hat Kühlrippen 14 und (links) eine Gewindebohrung 16, an der mittels einer Schraube (in Fig. 1 nur schematisch durch eine Linie 18 angedeutet) das Gehäuse 20 eines Prozessorlüfters 22 befestigbar ist. Dieses Gehäuse 20 hat einen etwa zylindrischen Luftführungskanal 24, in dessen Mitte über radiale Speichen 26, von denen nur eine sichtbar ist, das Basisteil 28 eines elektronisch kommutierten Klauenpolmotors 29 befestigt ist.

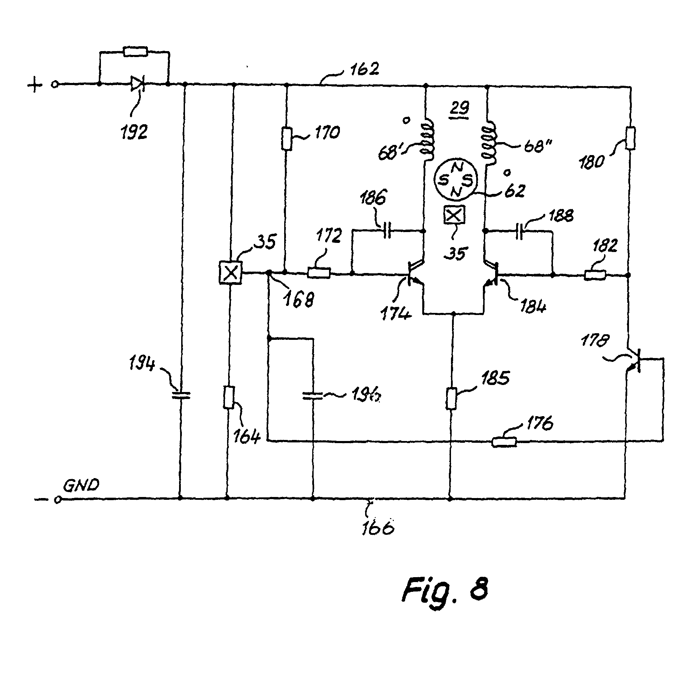

In der Mitte des Basisteils 28 ist in einer Vertiefung 30 ein weichferromagnetisches Lagertragrohr 32 eingepreßt. Ebenso ist eine Leiterplatte 34 auf dem Basisteil 28 befestigt. In einer Ausnehmung 37 der Leiterplatte 34 ist, wie dargestellt, ein Hall-IC 35 befestigt, der auch in Fig. 8 dargestellt ist.

In das Lagertragrohr 32 ist ein Gleitlager (Sinterlager) 36 eingepreßt, das die Welle 40 eines Außenrotors 42 lagert, deren Drehachse mit 43 bezeichnet ist. Mit ihrem oberen, freien Ende 44 liegt die Welle 40 gegen eine Lagerfläche 46 des Basisteils 28 an und ist dadurch axial gelagert. Dazu wirkt auf sie nach oben eine Kraft F, die magnetisch erzeugt wird. Die Erzeugung dieser magnetischen Kraft F wird nachfolgend näher erläutert. Es ist wichtig, daß diese Kraft ausreichend groß ist, um den Außenrotor 42 auch in der dargestellten Lage sicher am Stator festzuhalten, in der er nach unten hängt.

Am oberen Endbereich der Welle 40 ist als axiale Sicherung eine Scheibe 41 befestigt, die Öl (aus dem Sinterlager 36), das längs der Welle 40 nach oben wandert, nach außen schleudert, von wo es zum Sinterlager 36 zurückwandert.

Das untere Ende der Welle 40 ist im Rotorboden 50 einer aus Kunststoff hergestellten Rotorglocke 52 befestigt, mit der mehrere Lüfterflügel 54 einstükkig ausgebildet sind, von denen zwei sichtbar sind. Die Flügel 54 transportieren bei Drehung des Rotors 42 die Luft in Richtung der Pfeile 56, also von unten nach oben, d.h. die heiße Luft zwischen den Kühlrippen 14 wird nach oben abgesaugt. Hierdurch entsteht auf den Rotor 42 eine nach unten wirkende Kraft, die hier beispielsweise 0,05 N, beträgt (bei einer Drehzahl von 3900 U/min). Diese Kraft wirkt der Kraft F entgegen. Ebenso bewirkt das Gewicht des Rotors 42 eine Kraft von z.B. 0,1 N, welche der Kraft F entgegenwirkt, d.h. letztere muß größer sein als 0,05 + 0,1 = 0,15 N. In der Praxis sollte also die magnetisch erzeugte Kraft F bei diesem Beispiel mindestens 0,2 N betragen, um eine sichere axiale Lagerung des Rotors 42 in allen Lagen des Lüfters 22 zu gewährleisten.

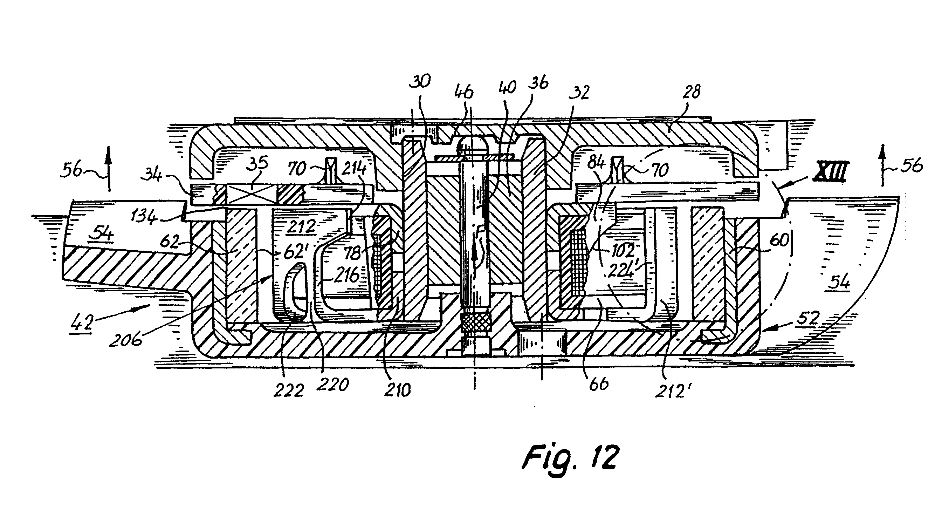

Im Inneren der Rotorglocke 52 ist ein weichferromagnetisches Rückschlußteil 60 durch Kunststoffspritzen befestigt, und in ihm ist ein radial magnetisierter Ringmagnet 62 (Rotormagnet) bofestigt, der in Umfangsrichtung vierpolig und - bevorzugt - trapezförmig magnetisiert sein kann. Sein oberes Ende liegt dem Hall-IC 35 etwa gegenüber, so daß der Rotormagnet 62 mit seinem Streufeld den Hall-IC 35 steuert. Wie dargestellt, ist der Hall-IC 35 gegenüber dem oberen Ende des Magneten 62 radial etwas nach innen versetzt. Die hierbei erhaltenen Vorteile werden nachfolgend bei Fig. 12 näher erläutert.

Auf der Außenseite des Lagertragrohrs 32 ist ein Innenstator 64 befestigt, dessen Einzelheiten in den nachfolgenden Figuren dargestellt sind. In seinem Inneren befindet sich ein Wickelkörper 66, auf den wie dargestellt eine Ringspule 68 aufgewickelt ist, die also konzentrisch zur Welle 40 angeordnet ist. Mittels Nieten 70 ist der Innenstator 64 auf der Leiterplatte 34 befestigt.

Zur Erzeugung der magnetischen Kraft F verwendet man beim vorliegenden Motor 29 einen unsymmetrischen Aufbau des magnetischen Kreises des Stators 64. Dieser enthält, wie bereits beschrieben, den Wickelkörper 66 mit der Ringspule 68, und dieser Wickelkörper 66 befindet sich bei einem Klauenpolmotor zwischen zwei Statorpolstücken, nämlich einem oberen Polblech 74 und einem unteren Polblech 76. Das obere Polblech 74 hat einen ringförmigen inneren Abschnitt oder Kragen 78, der auf das Lagertragrohr 32 aufgepreßt und dadurch an diesem befestigt ist. Ebenso hat das untere Polblech 76 einen ringförmigen inneren Abschnitt oder Kragen 80, der ebenfalls auf das Lagertragrohr 32 aufgepreßt ist. Zwischen sich halten also die Polbleche 74, 76 den Wickelkörper 66 mit seiner Spule 68.

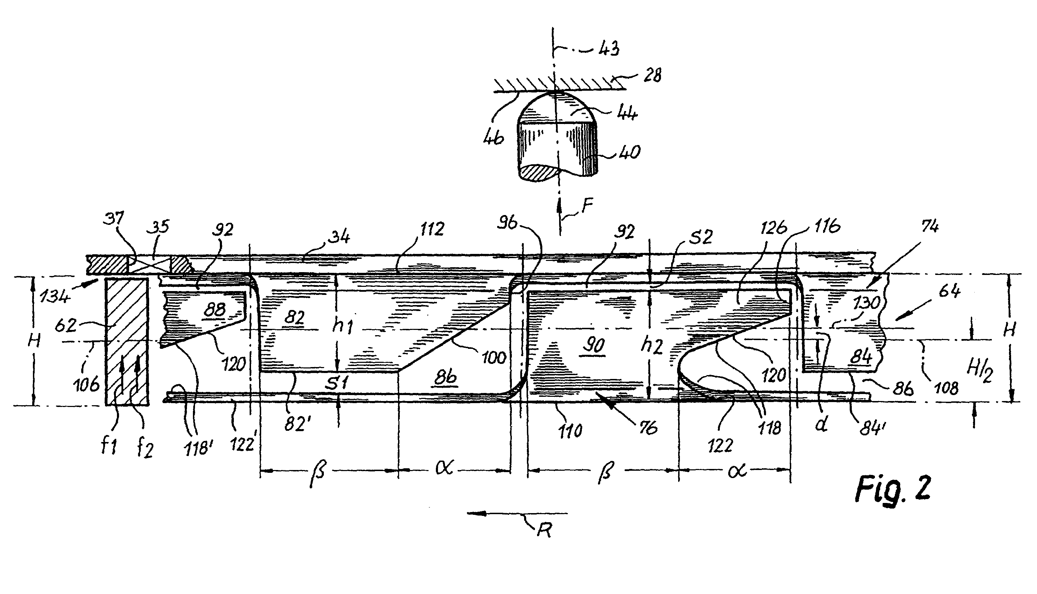

Das obere Polblech 74 liegt direkt auf der Leiterplatte 34 auf und hat gemäß Fig. 2 zwei Klauenpole 82, 84 von identischer Form, die in axialer Richtung von oben nach unten in entsprechende Lücken 86 ragen, die zwischen den nach oben ragenden Klauenpolen 88, 90 des unteren Polblechs 76 ausgebildet sind. Umgekehrt ragen die Klauenpole 88, 90 in Lücken 92 zwischen den Klauenpolen 82 und 84.

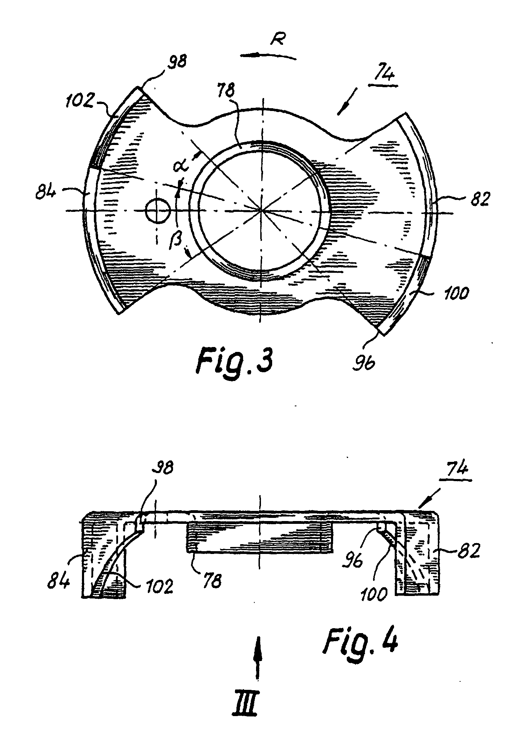

Die Form des oberen Polblechs 74 ist am besten aus den Fig. 3 und 4 ersichtlich. Die Drehrichtung des Rotors 42 ist dort mit R bezeichnet. Man erkennt, daß die Klauenpole 82, 84, ausgehend von ihrer auflaufenden Kante 96 bzw. 98, jeweis in einem Winkelbereich α in Drehrichtung breiter werden und dazu eine schräge Kante 100 bzw. 102 haben, Im anschließenden Drehwinkelbereich β ist ihre Breite h1 (bezogen auf die axiale Richtung) konstant. Typische Werte sind: α = 60° el.; β = 100° el.

Bei einem üblichen Klauenpolmotor, wie ihn z.B. die EP 766 370 A2 zeigt, sind die Klauenpole des oberen Polblechs und des unteren Polblechs identisch, d.h. bei den bekannten Motoren hat der Innenstator einen symmetrischen Aufbau.

Abweichend hiervon sind bei der vorliegenden Erfindung die Polbleche 74 und 76 unterschiedlich ausgebildet, vgl. Fig. 2, um einen asymmetrischen Aufbau des Stators zu erhalten. Dieser asymmetrische Aufbau erfüllt die zusätzliche Bedingung, daß er eine Form des Reluktanzmoments ermöglicht, wie sie für den Betrieb des Motors erforderlich ist. (Das Reluktanzmoment entsteht bei der Drehung durch das Zusammenwirken des permanentmagnetischen Rotors 62 und der Weicheisenmassen der Klauenpole, die dem Rotor 62 gegenüberliegen).

In Fig. 2 sind - zum besseren Verständnis - der Rotormagnet 62 (nur im Schnitt; angedeutet) und das Axiallager 44, 46 dargestellt. Der Rotormagnet 62 hat eine magnetische Mittelebene 106, die senkrecht zur Drehachse 43 verläuft. Diese Mittelebene 106 würde, wenn ein homogener Magnet dort zerschnitten würde, diesen in zwei im wesentlichen identische Ringe zerteilen. Der Innenstator 64 hat eine geometrische Mittelebene 108, d.h. wenn der Stator 64 die Gesamthöhe H hat, hat seine geometrische Mittelebene 108 den Abstand H/2 von beiden axialen Stirnseiten 110, 112 des Stators 64.

Die beiden Klauenpole 88, 90, von denen in Fig. 2 nur einer vollständig dargestellt ist, haben dieselbe Form, weshalb eine Beschreibung und Darstellung des Klauenpols 90 genügt. An seiner auflaufenden Kante 116 hat dieser eine Aussparung 118 der Länge α, an die sich ein Teil des Klauenpols 90 mit der Länge β anschließt; im letzteren Teil befindet sich keine Aussparung.

Charakteristikum der Aussparung 118 (bzw. 118' im Klauenpol 88) ist, daß sie sich in Drehrichtung R verjüngt, also schmaler wird. Dies geschieht bevorzugt durch einen schrägen Verlauf an ihrer oberen Berandung 120 bzw. 120', während die untere Berandung 122 bzw. 122' senkrecht zur Drehachse 43 verläuft und möglichst weit unten liegt. Jedoch könnte auch umgekehrt die Berandung 122 bzw. 122' schräg verlaufen, und die Berandung 120 senkrecht zur Drehachse 43. In diesem Fall würde jedoch die Kraft F kleiner.

Die schräge Berandung 120 bzw. 120' verläuft im wesentlichen parallel zur Kante 100 des Klauenpols 82, bezogen auf die Abwicklung der Fig. 2.

Durch diese Ausgestaltung der Klauenpole 88, 90 erreicht man, daß der Teil 126 dieser Klauenpole, der in Fig. 2 für den Klauenpol 90 grau dargestellt ist, im Vergleich zu einem Polblech gemäß Fig. 3 und 4 sozusagen um ein Stockwerk nach oben verschoben ist.

Zusätzlich geht man gemäß der Erfindung in bevorzugter Weise so vor, daß die axiale Erstreckung h1 der oberen Klauenpole 82, 84 kleiner ist als die axiale Erstreckung h2 der-unteren Klauenpole 88, 90, d.h. der axiale Spalt s1 zwischen dem unteren Polblech 76 und dem unteren Ende 82' bzw. 84' der oberen Klauenpole 82, 84 ist größer als der axiale Spalt s2 zwischen dem oberen Polblech 74 und den oberen Enden der unteren Klauenpole 88, 90. (Es wäre auch eine Ausführung möglich, bei der h1 = h2 ist, doch würde dann die Kraft F kleiner).

Auf diese Weise erreicht man, daß auf den Rotormagneten 62, der sich in der Lage gemäß Fig. 2 befindet, eine Kraft f₁ in Richtung nach oben wirkt, welche bestrebt ist, die magnetische Mittelebene 106 des Rotors 62 mit der magnetischen Symmetrieebene 130 des Stators 64 zum Fluchten zu bringen. Diese magnetische Symmetrieebene 130 des Stators 64 liegt um den Abstand d höher als seine geometrische Mittelebene 108. Dies ist also eine Folge der "Höherversetzung" der Abschnitte 126, und der unterschiedlichen Spalte s1 und s2.

Es kommt ein zweiter Effekt hinzu: Wie beschrieben, steuert der Rotormagnet 62 mit seinem axialen Streufeld den Hall-IC 35, der in einer Ausnehmung 37 der Leiterplatte 34 angeordnet ist. Dieser Hall-IC 35 ist in Fig. 2 zur Veranschaulichung ebenfalls dargestellt. Um diese Ansteuerung zu ermöglichen, liegt zwischen dem Hall-IC 35 und dem oberen Ende des Rotormagneten 62 nur ein kleiner axialer Luftspalt 134 von z.B. 0,3 mm.

Dadurch ist der Rotormagnet 62, der bevorzugt dieselbe Höhe H hat wie der Stator 64, gegenüber letzterem um diese axiale Luftspaltgröße 134 nach unten versetzt, also z.B. um 0,3 mm, was eine zusätzliche, nach oben wirkende Kraft f₂ auf den Rotormagneten 62 bewirkt, denn an beiden axialen Enden des Rotormagneten 62 werden durch diese Versetzung die Magnetfelder verzerrt, und diese Verzerrung bewirkt die Kraft f₂. Dies gilt besonders bei der hier in axialer Richtung vorhandenen, praktisch rechteckförmigen Verteilung der Magnetflußdichte am Rotormagneten 62.

Die Kräfte f₁ und f₂ addieren sich zur magnetisch erzeugten Kraft F = f₁ + f₂, die den Rotor 42 gemäß Fig. 1 sicher nach oben zieht und das freie Ende 44 der Welle 40 sicher in Anlage gegen die Lagerfläche 46 hält.

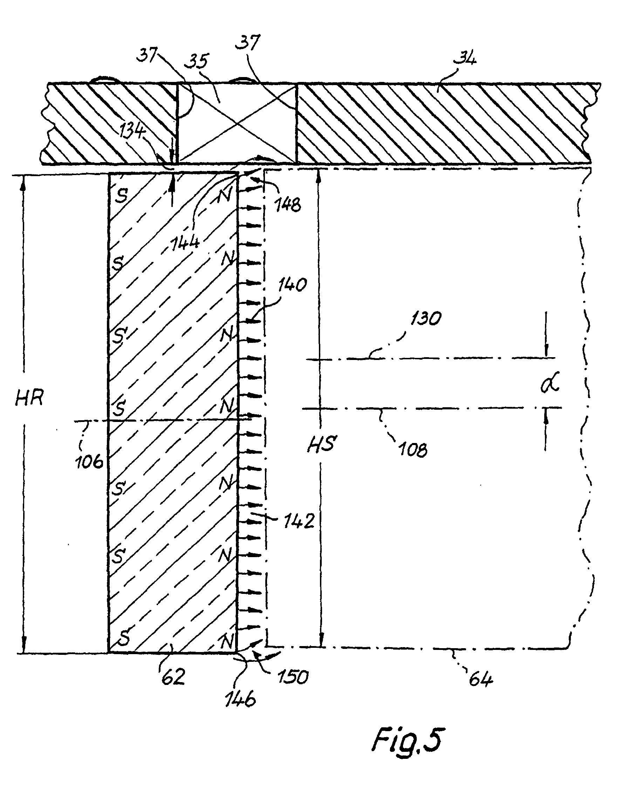

Fig. 5 erläutert die Erzeugung der Kraft f₂. Das Magnetfeld 140 zwischen dem Rotormagneten 62 und dem (nur schematisch angedeuteten) Stator 64 hat im Luftspalt 142 einen im wesentlichen homogenen Verlauf.

Aber im Bereich der oberen Kante 144 und der unteren Kante 146 des Rotormagneten 62 wird dieses Feld in der Weise verzerrt, wie es in Fig. 5 bei 148 und 150 schematisch dargestellt ist. Dies gilt unter der Voraussetzung, daß die Länge HR des Rotors 62 im wesentlichen mit der Höhe HS des Stators 64 übereinstimmt. Wenn man sich die magnetischen Feldlinien 140 wie Gummifäden vorstellt, so sind diese Feldlinien an beiden Kanten 144 und 146 sozusagen gedehnt und deshalb bestrebt, den Rotormagneten 62 nach oben zu ziehen, wodurch in dieser Stellung des Rotors 62 die Kraft f2 erzeugt wird.

Die Kraft f₁ wird dadurch erzeugt, daß die Magnetflußdichte im oberen Bereich des Stators 64 - durch das dort vermehrt vorhandene Eisen der Klauenpole - etwas höher ist als im unteren Bereich; in Fig. 5 ist das nicht dargestellt.

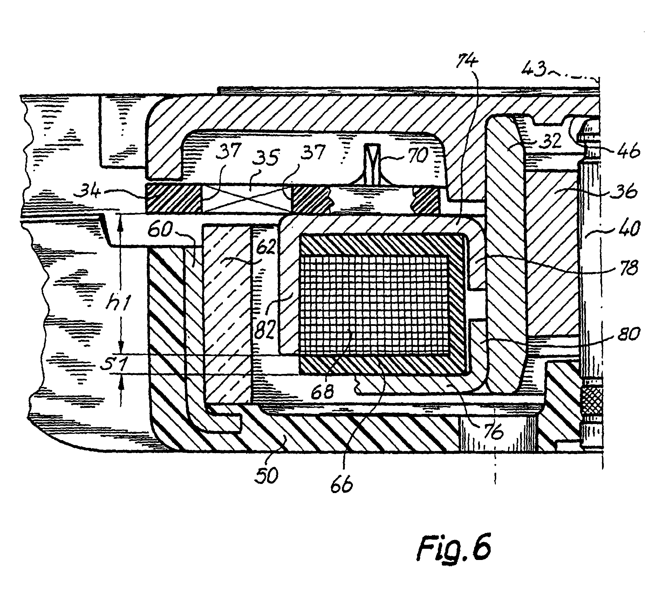

Fig. 6 zeigt an einer Ausschnittdarstellung eine weitere Einzelzeit zur Erläuterung der maximalen Spaltbreite s1, vgl. Fig. 2. Versuche haben gezeigt, daß die oberen Klauenpole 82, 84 eine solche Länge haben sollten, daß sie die Spule 68 überdecken, wie das in Fig. 6 dargestellt ist.

Wird h1 kleiner gemacht als in Fig. 6, so daß die Spule 68 nicht überdeckt wird, so entstehen durch den vergrößerten Spalt s1 Streuflüsse von der Spule 68 und erzeugen axiale Rüttelkräfte auf den Rotor 62, und dadurch zusätzliche Motorgeräusche.

Bei einem symmetrischen Aufbau des Stators 64 würden solche axialen Kräfte auch dann nicht auftreten, wenn die Klauenpole beider Polbleche in der gleichen Weise stark verkürzt würden, da sich dabei die Streuflüsse gegenseitig aufhöben. Bei der unsymmetrischen Bauweise gemäß Fig. 2, 7 oder 9 bis 13 mit den unterschiedlichen Spalten s1 und s2 sollte aber die Regel eingehalten werden, daß h1 so groß ist, daß die oberen Klauenpole 82, 84 die Spule 68 überdecken, sofem man wünscht, diese Motorgeräusche zu vermeiden.

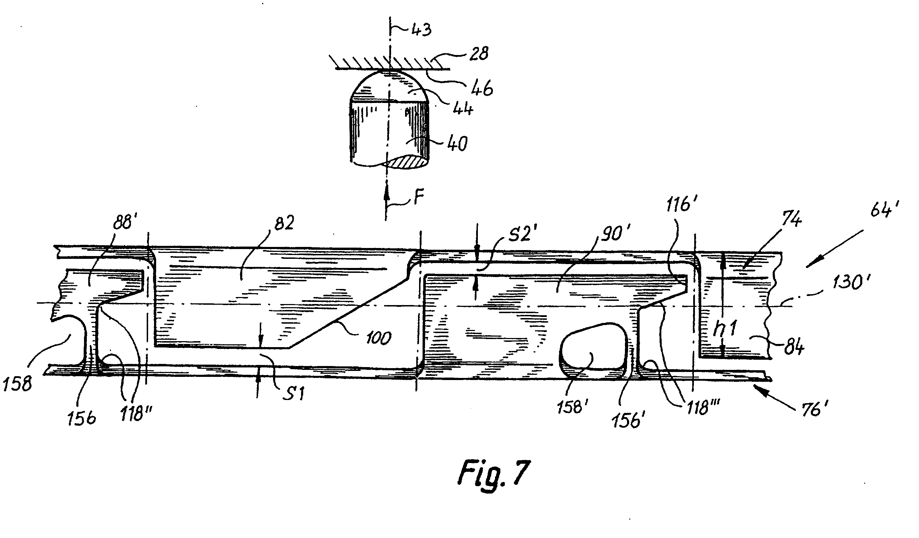

Fig. 7 zeigt eine Variante zum Statoraufbau der Fig. 2. Der Stator gemäß Fig. 7 ist mit 64' bezeichnet. Das obere Polblech 74 mit seinen Klauenpolen 82 und 84 entspricht der Bauform, die anhand der Fig. 2 bis 4 bereits ausführlich beschrieben wurde.

Das untere Polblech 76' hat in seinen Klauenpolen 88', 90' Aussparungen 118" bzw. 118"', und diese enthalten Verstärkungsstege 156 bzw. 156', die zur mechanischen Verstärkung der Klauenpole 88', 90' dienen. Hierbei muß berücksichtigt werden, daß diese Klauenpole sehr klein und dünn sind und deshalb bei mechanischer Beanspruchung leicht verformt werden könnten. Optimal wäre es, diese Verstärkungsstege 156, 156' aus nichtmagnetischem Material herzustellen, z.B. aus Messing oder Kunststoff. Bevorzugt sollten diese Verstärkungsstege unter einem Winkel zur axialen Richtung verlaufen, um störende magnetisch erzeugte Drehmomente zu vermeiden.

Bei dieser Bauweise entstehen also in den unteren Klauenpolen 88', 90' geschlossene Öffnungen 158, 158', die magnetisch einen Teil der Ausnehmungen 118" bzw. 118"' darstellen, wie ein Vergleich der Fig. 2 und 7 zeigt.

Die Steqe 156, 156' verlaufen bei Fig. 7 parallel zur Drehachse 43, könnten aber bevorzugt auch unter einem Winkel zu ihr verlaufen. Statt nur eines Steges könnten auch zwei oder drei vorgesehen werden, die dann dünner ausgebildet werden können und folglich leichter in die magnetische Sättigung gehen, was hier vorteilhaft ist. - Der Spalt s2' ist hier größer dargestellt als der Spalt s2 der Fig.2. Dieser Spalt sollte möglichst klein sein; er kann ggf. auch radial verlaufen.

Fig. 8 zeigt eine Schaltung zum Betrieb eines erfindungsgemäßen Motors 29, dessen Rotormagnet 62 schematisch angedeutet ist. Die Wicklung 68 ist zweidrähtig gewickelt und hat deshalb zwei Stränge oder Phasen 68' und 68", die in Fig. 8 dargestellt sind. Zur Stromversorgung des Hall-IC 35 ist dieser mit einem Anschluß an eine Ptusleitung 162 und - über einen Widerstand 164 - an eine Minusleitung 166 angeschlossen. Sein Ausgang 168 ist über einen Pullup-Widerstand 170 mit der Plusleitung 162, einen Widerstand 172 mit der Basis eines npn-Dariington-Transistors 174, und einen Widerstand 176 mit der Basis eines npn-Transistors 178 verbunden, der als Phasenumkehrtransistor dient. Der Emitter des Transistors 178 ist mit der Minusleitung 166 verbunden; sein Kollektor - über einen Widerstand 180 - mit der Plusleitung 162 und - über einen Widerstand 182 - mit der Basis eines npn-Darlington-Transistors 184.

Die Emitter der Transistoren 174, 184 sind miteinander und - über einen gemeinsamen Emitterwiderstand 185 - mit der Minusleitung 166 verbunden. Der Kollektor des Transistors 174 ist über den Wicklungsstrang 68' mit der Plusleitung 162 verbunden. Ebenso ist der Kollektor des Transistors 184 über den Wicklungsstrang 68" mit der Plusleitung 162 verbunden. Zwischen Kollektor und Basis der Transistoren 174, 184 liegt jeweils ein Kondensator 186 bzw. 188 (z.B. 3,3 nF), dessen Funktion es ist, die Schaltvorgänge zu verlangsamen und dadurch hochfrequente Störungen bei der Kommutierung zu vermeiden.

Wenn bei der Drehung des Rotors 42 durch das axiale Streu-Magnetfeld des Rotormagneten 62 das Signal am Ausgang 168 des Hall-IC 35 hoch wird, werden die Transistoren 174 und 178 leitend. Dadurch erhält der Strang 68' Strom, und der Transistor 184 wird gesperrt, weil seine Basis über den Transistor 178 mit der Minusleitung 166 verbunden wird.

Wird umgekehrt durch das Magnetfeld des Rotormagneten 62 das Signal am Ausgang 168 des Hall-IC 35 niedrig, so werden die Transistoren 174 und 178 gesperrt. Über den Widerstand 180 erhält jetzt der Transistor 184 einen Basisstrom, der ihn leitend macht, so daß in diesem Fall der Strang 68" Strom erhält und der Strang 68' stromlos wird.

Das Potential am Ausgang 168 des Hall-IC 35 wird dadurch gesteuert, daß diesem Hall-IC entweder ein Nordpol oder ein Südpol des Rotormagneten 62 gegenüberliegt, d.h. die Ströme in den Strängen 68', 68" werden von der Drehstellung des Rotors 62 gesteuert.

Eine Diode 192 verhindert, daß der Motor 29 bei Falschpolung zerstört wird. Die Kondensatoren 194, 196 dienen zum Ausfiltem von Störimpulsen, um einen ruhigen Lauf des Motors zu erhalten, und sie verhindern auch, daß Störspannungen aus dem Motor 29 nach außen gelangen.

Da bei dem beschriebenen Motor 29 der Rotor 62 eine geringe axiale Länge HR haben kann und trotzdem eine ausreichende axiale Kraft F erzeugt wird, ergibt sich insgesamt eine erheblich reduzierte Bauhöhe des beschriebenen Prozessorlüfters 22 (oder sonstigen Geräts), bei zuverlässiger Funktion.

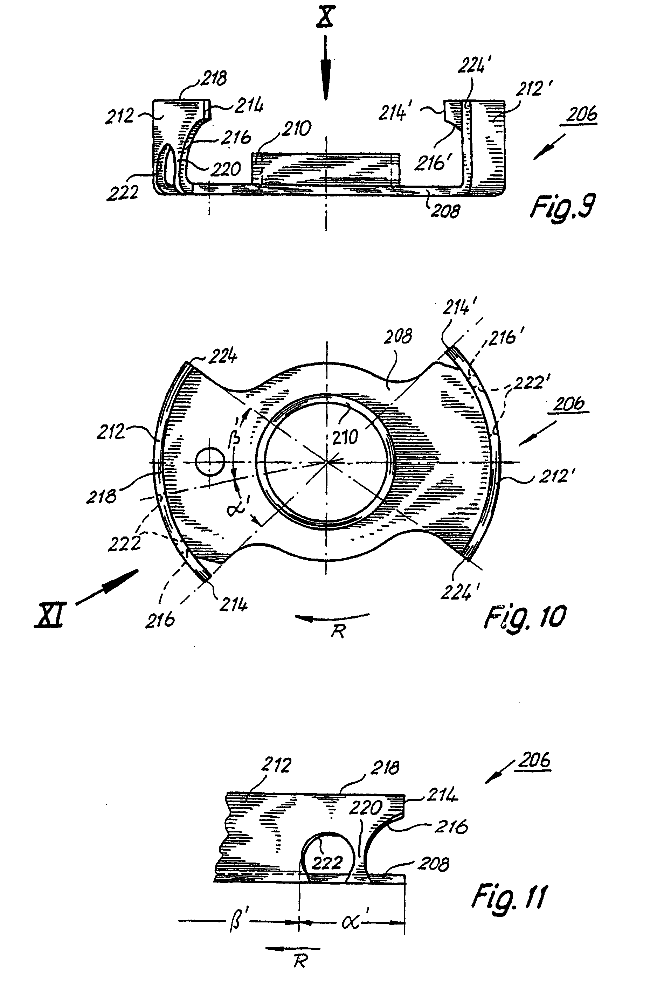

Bei der Variante nach den Fig. 9 bis 13 hat das obere Polblech 74 dieselbe Form, wie sie anhand der Fig. 3 und 4 ausführlich beschrieben wurde.

Das untere Polblech 206 ist ähnlich aufgebaut wie das untere Polblech 76' der Fig. 7. Es hat gemäß Fig. 9 und 10 einen flachen Abschnitt 208 mit einem inneren Kragen 210, und es hat zwei Klauenpole 212, 212' von symmetrischer Form, weshalb nur der Klauenpol 212 beschrieben wird. Die Teile des Klauenpols 212' erhalten dieselben Bezugszeichen wie die Teile des Klauenpols 212, aber mit einem nachgestellten Apostrophen, also z.B. 212' statt 212.

In einem Winkelbereich α'hat der Klauenpol 212 ein in Drehrichtung R zunehmendes Eisenvolumen, und in einem anschließenden Drehwinkelbereich β' ein konstantes Eisenvolumen. Hierzu hat dieser Klauenpol am auflaufenden Rand 214 eine etwa halbkreisförmige Aussparung 216, die sich aber nicht bis zur oberen Kante 218 dieses Klauenpols 212 erstreckt, sondern wie dargestellt unterhalb von ihr endet.

An diese Aussparung 216 schließt sich ein Steg 220 an, dessen Funktion es ist, dem Klauenpol 212 die nötige mechanische Festigkeit zu geben, und an den Steg 220 schließt sich eine etwa kreisförmige Aussparung 222 an, die so beschaffen ist, daß das Eisenvolumen des Klauenpols 212, wie bereits erläutert, im Drehwinkelbereich α' in Drehrichtung R generell zunimmt, oder umgekehrt gesagt, daß die Ausnehmungen 216, 222 in diesem Drehwinkelbereich eine abnehmende Tendenz haben.

Im anschließenden Drehwinkelbereich β' (Fig. 10) hat der Klauenpol 212 seine volle axiale Erstreckung, also sein maximales Eisenvolumen, und er endet an der ablaufenden Kante 224.

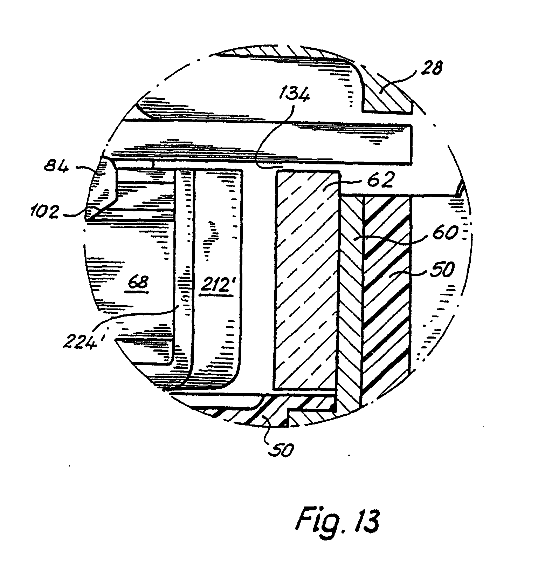

Da beim Motor der Fig. 12 und 13 der mechanische Aufbau mit Fig. 1 in allen wesentlichen Punkten übereinstimmt, werden für die übereinstimmenden Teile dieselben Bezugszeichen verwendet wie in Fig. 1, und diese Teile werden nicht nochmals beschrieben.

Der Hallgenerator 35 ist auch hier in der Leiterplatte 34 radial nach innen versetzt, so daß seine Mitte etwa über der radial inneren Kante 62' des Rotormagneten 62 liegt. Es hat sich gezeigt, daß bei einer solchen Anordnung der Hallgenerator 35 sicherer durch das Magnetfeld des Rotormagneten 62 gesteuert werden kann. Die Steuerung des Hallgenerators 35 erfolgt ja durch das Streufeld des radial magnetisierten Magneten 62, und in der dargestellten Position erreicht das Streufeld seine größte Magnetflußdichte.

Auch bei der Anordnung nach den Fig. 9 bis 13 entsteht eine magnetische Kraft F, welche die Welle 40 gegen die Lagerfläche 46 preßt. Die Erzeugung dieser Kraft F wurde anhand der Fig. 2, 5 und 7 bereits ausführlich beschrieben, so daß hierauf verwiesen werden kann. Wesentlich erscheint bei der Ausführungsform nach den Fig. 9 bis 13, daß die Form des Stegs 220 die magnetischen Forderungen des Motors (optimale Form des erzeugten Reluktanzmoments) gut mit den Forderungen nach magnetischer Festigkeit dieses Stegs und damit der Klauenpole 212, 212' verbindet.

Die Winkel α' und β' der Fig. 10 stimmen im wesentlichen mit den Winkeln α und β der Fig. 2 und 3 überein.

Naturgemäß sind im Rahmen der vorliegenden Erfindung vielfache Abwandlungen und Modifikationen möglich.

## Patentansprüche

1. Klauenpolmotor (29), insbesondere elektronisch kommutierter Klauenpolmotor, mit einem Innenstator (64), der zwei weichmagnetische Statorpolstücke (74, 76; 76'; 206) mit Klauenpolen (82, 84, 88, 90; 88', 90'; 212, 212') aufweist, von denen jeder in eine zugeordnete Lücke (86, 92) zwischen zwei Klauenpolen des gegenüberliegenden Statorpolstücks ragt, mit einem Außenrotor (42), in dem ein Rotormagnet (62) angeordnet ist, der bezüglich seiner axialen Erstreckung eine sich quer zur Drehachse (43) erstreckende magnetische Mittelebene (106) aufweist und dem ein Axiallager (44, 46) zugeordnet ist, wobei durch eine zwischen Innenstator (64) und Rotormagnet (62) in Axialrichtung wirksame magnetische Kraft (F) der Außenrotor (42) in Richtung zu diesem Axiallager (44, 46) beaufschlagt ist,
und die die Klauenpole (82, 84, 88, 90; 88' 90'; 212, 212') bildenden Eisenmassen eine magnetische Symmetrieebene (130; 130') definieren dergestalt, dass sich ein axial frei verschiebbarer Rotormagnet mit seiner magnetischen Mittelebene (106) der magnetischen Symmetrieebene (130; 130') des Innenstators (64) gegenüberstellen würde, **dadurch gekennzeichnet, dass** durch unsymmetrische Formgebung der Klauenpole (82, 84, 88, 90; 88', 90'; 212, 212') diese magnetische Symmetrieebene (130; 130') des Innenstators (64; 64') relativ zu dessen geometrischer Mittelebene (108) in Richtung hin zum Axiallager (44, 46) verschoben ist,
und die magnetische Mittelebene (106) des im Außenrotor (42) vorgesehenen Rotormagneten (62) relativ zur magnetischen Symmetrieebene (130; 130') des Innenstators (64; 64') in Richtung weg vom Axiallager (44, 46) axial versetzt ist.

2. Klauenpolmotor nach Anspruch 1, bei welchem die Klauenpole mindestens teilweise und mindestens in Teilbereichen relativ zur Umfangsrichtung schräg verlaufende Kanten (100; 120, 120'; 216) aufweisen, so dass in diesen Teilbereichen ihre magnetisch wirksame Breite (h1, h2) in Drehrichtung (R) des Außenrotors (42) zunimmt.

3. Klauenpolmotor nach Anspruch 2, bei welchem bei den vom Axiallager (44, 46) weg ragenden Klauenpolen (82, 84) des einen Statorpolstücks (74) und den zu diesem Statorpolstück (74) hin ragenden Klauenpolen (88, 90; 88', 90'; 212, 212') des anderen Statorpolstücks (76; 76'; 206) schräg verlaufende Kanten (100; 120, 120'; 216) gleichermaßen auf der vom Axiallager (44, 46) abgewandten Seite des betreffenden Klauenpols (82, 84, 88, 90; 88', 90'; 212, 212') vorgesehen sind.

4. Klauenpolmotor nach einem oder mehreren der vorhergehenden Ansprüche, bei welchem bei mindestens einem Teil der in Richtung zum Axiallager (44, 46) ragenden Klauenpole (88, 90; 88', 90'; 212, 212') mindestens eine Aussparung (118, 118'; 118", 118"'; 216, 216') vorgesehen ist, welche sich in Drehrichtung (R) von einer auflaufenden Seitenkante (116; 116'; 214, 214') des betreffenden Klauenpols mit in Drehrichtung (R) abnehmender magnetisch wirksamer Breite in diesen hinein erstreckt.

5. Klauenpolmotor nach Anspruch 4, bei welchem die Aussparung (118", 118"'; 216, 222) durch mindestens einen Versteifungssteg (156, 156'; 220, 220') unterteilt ist (Fig. 7).

6. Klauenpolmotor nach Anspruch 5, bei welchem der Versteifungssteg (156, 156'; 220, 220') im wesentlichen in axialer Richtung, oder unter einem Winkel zur axialen Richtung, verläuft.

7. Klauenpolmotor nach einem oder mehreren der vorhergehenden Ansprüche, bei welchem mit dem Rotorboden (50) eine Drehwelle (40) des Rotors (42) fest verbunden ist, welche durch eine zwischen dem im Rotor (42) vorgesehenen Rotormagneten (62) und dem Innenstator (64) wirksame magnetische Kraft (F) in Anlage gegen eine axiale Lagerstelle (46) des Motors (29) gehalten ist.

8. Klauenpolmotor nach einem oder mehreren der vorhergehenden Ansprüche, bei welchem die axiale Erstreckung (h1) der Klauenpole (82, 84) des näher beim Axiallager (44, 46) liegenden Statorpolstücks (74) mindestens teilweise kleiner ist als die axiale Erstreckung (h2) der Klauenpole (88, 90; 88', 90'; 212, 212') des anderen Statorpolstücks (76; 76'; 206).

9. Klauenpolmotor (29), insbesondere elektronisch kommutierter Klauenpolmotor,
mit einem Außenrotor (42) in Form einer Rotorglocke (52), an deren Boden (50) eine Welle (40) befestigt ist und in der ein Rotormagnet (62) angeordnet ist,
mit einem Stator (64; 64'), der auf seiner vom Rotorboden (50) abgewandten Seite ein erstes weichferromagnetisches Statorpolstück (74) aufweist, das mit zum Rotorboden (50) hin ragenden ersten Klauenpolen (82, 84) versehen ist,
und der auf seiner dem Rotorboden (50) zugewandten Seite ein zweites weichferromagnetisches Statorpolstück (76; 76'; 206) aufweist, das mit vom Rotorboden (50) weg ragenden zweiten Klauenpolen (88, 90; 88'; 90'; 212, 212') versehen ist, die in Lücken (92). zwischen den ersten Klauenpolen (82, 84) ragen,
mit einem Axiallager (44, 46), durch welches das vom Rotorboden (50) abgewandte Ende (44) der Welle (40) abgestützt ist,
und mit einer axialen Versetzung (134), um welche der Rotormagnet (62) relativ zum Stator (64; 64') in Richtung weg von diesem Axiallager (40, 44) versetzt ist, um eine das Axiallager (40, 44) beaufschlagende magnetische Kraft (F) zu erzeugen, **dadurch gekennzeichnet, dass** die vom Rotorboden (50) weg ragenden zweiten Klauenpole (88, 90; 88', 90'; 212, 212') des zweiten weichferromagnetischen Statorpolstücks (76; 76', 206) eine größere axiale Erstreckung (h2) als die ersten Klauenpole (82, 84) haben.

10. Klauenpolmotor nach einem oder mehreren der Ansprüche 1 bis 9, bei welchem das erste Statorpolstück (74) auf einer Leiterplatte (34) angeordnet ist, an welcher ein galvanomagnetischer Sensor (35) im Bereich einer Stirnseite des an der Rotorglocke (52) vorgesehenen Rotormagneten (62) angeordnet ist.

11. Klauenpolmotor nach Anspruch 10, bei welchem der galvanomagnetische Sensor (35) in einer Ausnehmung (37) der Leiterplatte (34) angeordnet ist.

12. Klauenpolmotor nach Anspruch 10 oder 11, bei welchem der Sensor (35) gegenüber der Stimseite des Rotormagneten (62) radial in Richtung zur Drehachse des Motors versetzt ist.

13. Klauenpolmotor nach einem oder mehreren der Ansprüche 10 bis 12, bei welchem die dem galvanomagnetischen Sensor (35) zugewandte Stirnseite des Rotormagneten (62) durch einen axialen Luftspalt (134) vom galvanomagnetischen Sensor (35) getrennt ist, welcher axiale Luftspalt (134) mindestens einen Teil der axialen Versetzung zwischen Stator (64; 64') und Rotor (42) bildet.

14. Klauenpolmotor nach einem oder mehreren der Ansprüche 9 bis 13, bei welchem die axiale Erstreckung (HR) des Rotormagneten (62) im wesentlichen mit der axialen Erstreckung (HS) des Stators (64; 64') übereinstimmt.

15. Klauenpolmotor nach einem oder mehreren der Ansprüche 9 bis 14, bei welchem das Axiallager als Gleitlager zwischen einem freien Ende (44) der Welle (40) und einem statorfesten Teil (28) ausgebildet ist.

16. Klauenpolmotor nach einem oder mehreren der vorhergehenden Ansprüche, welcher als Kleinstmotor ausgebildet ist.

17. Verwendung eines Klauenpolmotors nach einem oder mehreren der vorhergehenden Ansprüche zum Antrieb eines Lüfters (22).

18. Verwendung eines Klauenpolmotors nach Anspruch 17, wobei der Lüfter ein Prozessorlüfter (22) ist.

## Claims

1. Claw pole motor (29), in particular electronically commutated claw pole motor, with an internal stator (64), which exhibits two soft-magnetic stator pole pieces (74, 76; 76'; 206) with claw poles (82, 84, 88, 90; 88', 90'; 212, 212'), each of which projects into an associated gap (86, 92) between two claw poles of the facing stator pole piece, with an external rotor (42), in which a rotor magnet (62) is arranged which with respect to its axial extension exhibits a magnetic median plane (106) extending transversely to the axis of rotation (43) and has associated therewith an axial bearing (44, 46), wherein the external rotor (42) is subjected to the action of a magnetic force (F) effective in the axial direction between the internal stator (64) and the rotor magnet (62) in the direction of this axial bearing (44, 46), and the iron masses forming the claw poles (82, 84, 88, 90; 88', 90'; 212, 212') define a magnetic plane of symmetry (130; 130') such that an axially freely displaceable rotor magnet would stand with its magnetic median plane (106) opposite the magnetic plane of symmetry (130; 130') of the internal stator (64), **characterised in that** through unsymmetrical shaping of the claw poles (82, 84, 88, 90; 88', 90'; 212, 212') this magnetic plane of symmetry (130; 130') of the internal stator (64; 64') is displaced relative to its geometric median plane (108) in the direction of the axial bearing (44, 46), and the magnetic median plane (106) of the rotor magnet (62) provided in the external rotor (42) is offset axially relative to the magnetic plane of symmetry (130; 130') of the internal stator (64; 64') in the direction away from the axial bearing (44, 46).

2. Claw pole motor according to claim 1, in which the claw poles exhibit at least partly and at least in part areas edges (100; 120, 120'; 216) running obliquely relative to the circumferential direction so that in these part areas their magnetically effective breadth (h1, h2) increases in the direction of rotation (R) of the external rotor (42).

3. Claw pole motor according to claim 2, in which in the case of the claw poles (82, 84) of the first stator pole piece (74) projecting away from the axial bearing (44, 46) and the claw poles (88, 90; 88', 90'; 212, 212') of the other stator pole piece (76; 76'; 206) projecting towards this stator pole piece (74), edges (100; 120, 120'; 216) running obliquely are provided equally on the side of the claw pole (82, 84, 88, 90; 88', 90'; 212, 212') concerned remote from the axial bearing (44, 46).

4. Claw pole motor according to one or more of the preceding claims, in which in the case of at least one part of the claw poles (88, 90; 88', 90'; 212, 212') projecting in the direction of the axial bearing (44, 46), at least one recess (118, 118'; 118", 118"'; 216, 216') is provided which in the direction of rotation (R) extends from a rising side edge (116; 116'; 214, 214') of the claw pole concerned into the latter with a magnetically effective breadth decreasing in the direction of rotation (R).

5. Claw pole motor according to claim 4, in which the recess (118", 118"'; 216, 222) is sub-divided by at least one stiffening strip (156, 156'; 220, 220') (fig. 7).

6. Claw pole motor according to claim 5, in which the stiffening strip (156, 156'; 220, 220') runs essentially in the axial direction, or at an angle to the axial direction.

7. Claw pole motor according to one or more of the preceding claims, in which the rotor bottom (50) is firmly connected to a rotation shaft (40) of the rotor (42), which shaft is held bearing against an axial bearing location (46) of the motor (29) by a magnetic force (F) effective between the rotor magnet (62) provided in the rotor (42) and the internal stator (64).

8. Claw pole motor according to one or more of the preceding claims, in which the axial extension (h1) of the claw poles (82, 84) of the stator pole piece (74) lying closer to the axial bearing (44, 46) is at least partly smaller than the axial extension (h2) of the claw poles (88, 90; 88', 90'; 212, 212') of the other stator pole piece (76; 76'; 206).

9. Claw pole motor (29), in particular electronically commutated claw pole motor, with an external rotor (42) in the form of a rotor bell (52) on whose bottom (50) is secured a shaft (40) and in which a rotor magnet (62) is arranged, with a stator (64; 64') which on its side remote from the rotor bottom (50) exhibits a first soft-ferromagnetic stator pole piece (74) which is provided with first claw poles (82, 84) projecting towards the rotor bottom (50), and which on its side facing the rotor bottom (50) exhibits a second soft-ferromagnetic stator pole piece (76; 76'; 206) which is provided with second claw poles (88, 90; 88', 90'; 212, 212') projecting away from the rotor bottom (50) and extending into gaps (92) between the first claw poles (82, 84), with an axial bearing (44, 46) which supports the end (44) or the shaft (40) remote from the rotor bottom (50) and with an axial offset (134) by means of which the rotor magnet (62) is offset relative to the stator (64; 64') in the direction away from this axial bearing (40, 44) in order to produce a magnetic force (F) acting on the axial bearing (40, 44), **characterised in that** the second claw poles (88, 90; 88', 90'; 212, 212') of the second soft-ferromagnetic stator pole piece (76; 76', 206) projecting away from the rotor bottom (50) have a greater axial extension (h2) than the first claw poles (82, 84).

10. Claw pole motor according to one or more of claims 1 to 9, in which the first stator pole piece (74) is arranged on a circuit board (34) on which a galvanomagnetic sensor (35) is arranged in the area of a front side of the rotor magnet (62) provided on the rotor bell (52).

11. Claw pole motor according to claim 10, in which the galvanomagnetic sensor (35) is arranged in a recess (37) of the circuit board (34).

12. Claw pole motor according to claim 10 or 11, in which the sensor (35) is offset radially in the direction of the axis of rotation of the motor relative to the front side of the rotor magnet (62).

13. Claw pole motor according to one or more of claims 10 to 12, in which the front side of the rotor magnet (62) facing the galvanomagnetic sensor (35) is separated from the galvanomagnetic sensor (35) by an axial air gap (134) which forms at least one part of the axial offset between the stator (64; 64') and the rotor (42).

14. Claw pole motor according to one or more of claims 9 to 13, in which the axial extension (HR) of the rotor magnet (62) essentially coincides with the axial extension (HS) of the stator (64; 64') .

15. Claw pole motor according to one of more of claims 9 to 14, in which the axial bearing is embodied as a friction bearing between a free end (44) of the shaft (40) and a part (28) fixed in relation to the stator.

16. Claw pole motor according to one or more of the preceding claims, which is embodied as a very small motor.

17. Use of a claw pole motor according to one or more of the preceding claims for driving a fan (22).

18. Use of a claw pole motor according to claim 17, wherein the fan is a processor fan (22).

## Revendications

1. Moteur à pôles à griffes (29), en particulier moteur à pôles à griffes à commutation électronique,
avec un stator intérieur (64) qui présente deux pièces polaires statoriques (74, 76; 76'; 206) magnétiques douces dotées de pôles à griffes (82, 84, 88, 90; 88', 90', 212, 212') dont chacun fait saillie dans une lacune (86, 92) correspondante entre deux pôles à griffes de la pièce polaire statorique opposée,
avec un rotor extérieur (42) dans lequel est placé un aimant de rotor (62) qui présente un plan médian magnétique (106) s'étendant perpendiculairement à l'axe de rotation (43) par rapport à son extension axiale et auquel est associé un palier axial (44, 46), le rotor extérieur (42) étant soumis dans la direction de ce palier axial (44, 46) à une force magnétique agissant en direction axiale entre le stator intérieur (64) et l'aimant de rotor (62),
et dans lequel les masses métalliques formant les pôles à griffes (82, 84, 88, 90; 88', 90', 212, 212') définissent un plan de symétrie magnétique (130; 130') de telle façon qu'un aimant de rotor mobile en direction axiale se placerait, avec son plan de symétrie magnétique (106), en face du plan de symétrie magnétique (130; 130') du stator intérieur (64), **caractérisé par le fait que**, par une conformation asymétrique des pôles à griffes (82, 84, 88, 90 ; 88', 90', 212, 212'), ce plan de symétrie magnétique (130; 130') du stator intérieur (64; 64') est décalé en direction du palier axial (44, 46) par rapport à son plan médian géométrique (108),
et que le plan médian magnétique (106) de l'aimant de rotor (62) prévu dans le rotor extérieur (42) est décalé axialement dans la direction opposée au palier axial (44, 46) par rapport au plan de symétrie magnétique (130; 130') du stator intérieur (64 ; 64').

2. Moteur à pôles à griffes selon la revendication 1, dans lequel les pôles à griffes présentent au moins partiellement et au moins par sections des arêtes obliques (100; 120, 120'; 216) par rapport à la direction circonférentielle, de telle façon que dans ces sections leur largeur magnétique (h1, h2) augmente dans le sens de rotation (R) du rotor extérieur (42).

3. Moteur à pôles à griffes selon la revendication 2, dans lequel sont également prévues des arêtes obliques (100; 120, 120'; 216) sur le côté opposé au palier axial (44, 46) du pôle à griffes (82, 84, 88, 90 ; 88', 90', 212, 212') concerné pour les pôles à griffes (82, 84) de la pièce polaire statorique (74) faisant saillie à l'opposé du palier axial (44, 46) et les pôles à griffes (88, 90; 88', 90', 212, 212') de l'autre pièce polaire statorique (76 ; 76'; 206) faisant saillie vers cette pièce polaire statorique (74).

4. Moteur à pôles à griffes selon une ou plusieurs des revendications précédentes, dans lequel il est prévu pour au moins une partie des pôles à griffes (88, 90; 88', 90', 212, 212') faisant saillie en direction du palier axial (44, 46) au moins un évidement (118, 118'; 118", 118"'; 216, 216') qui s'étend, dans le sens de rotation (R) d'une arête latérale montante (116 ; 116'; 214, 214') du pôle à griffes concerné, dans ce dernier avec une largeur magnétique décroissante dans le sens de rotation (R).

5. Moteur à pôles à griffes selon la revendication 4, dans lequel l'évidement (118", 118"'; 216, 222) est divisé par au moins une entretoise de renfort (156, 156' ; 220, 220') (fig. 7).

6. Moteur à pôles à griffes selon la revendication 5, dans lequel l'entretoise de renfort (156, 156' ; 220, 220') s'étend essentiellement en direction axiale ou selon un angle par rapport à la direction axiale.

7. Moteur à pôles à griffes selon une ou plusieurs des revendications précédentes, dans lequel un arbre de rotation (40) du rotor (42) est solidaire du fond de rotor (50), lequel arbre est maintenu en appui contre un palier (46) du moteur (29) par une force magnétique (F) agissant entre l'aimant de rotor (62) prévu dans le rotor (42) et le stator intérieur (64).

8. Moteur à pôles à griffes selon une ou plusieurs des revendications précédentes, dans lequel l'extension axiale (h1) des pôles à griffes (82, 84) de la pièce polaire statorique (74) plus proche du palier axial (44, 46) est, au moins partiellement, plus petite que l'extension axiale (h2) des pôles à griffes (88, 90 ; 88', 90', 212, 212') de l'autre pièce polaire statorique (76; 76' ; 206).

9. Moteur à pôles à griffes (29), en particulier moteur à pôles à griffes à commutation électronique,
avec un rotor extérieur (42) sous la forme d'une cloche de rotor (52) sur le fond (50) de laquelle est fixé un arbre (40) et dans laquelle est placé un aimant de rotor (62),
avec un stator (64; 64') qui présente sur son côté opposé au fond de rotor (50) une première pièce polaire statorique (74) magnétique douce qui est munie de premiers pôles à griffes (82, 84) faisant saillie en direction du fond de rotor (50) et qui présente de son côté tourné vers le fond de rotor (50) une deuxième pièce polaire statorique (76; 76'; 206) magnétique douce qui est munie de deuxièmes pôles à griffes (88, 90; 88', 90', 212, 212') faisant saillie en direction opposée au fond de rotor (50), qui font saillie dans des lacunes (92) entre les premiers pôles à griffes (82, 84),
avec un palier axial (44, 46) servant d'appui à l'extrémité (44) de l'arbre (40) opposée au fond de rotor (50),
et avec un décalage axial (134) duquel l'aimant de rotor (62) est décalé par rapport au stator (64 ; 64') dans la direction opposée à ce palier axial (44, 46) afin de générer une force magnétique (F) s'exerçant sur le palier axial (44, 46), **caractérisé par le fait que** les deuxièmes pôles à griffes (88, 90; 88', 90', 212, 212') faisant saillie en direction opposée au fond de rotor (50) de la deuxième pièce polaire statorique (76; 76' ; 206) ont une plus grande extension axiale (h2) que les premiers pôles à griffes (82, 84).

10. Moteur à pôles à griffes selon une ou plusieurs des revendications 1 à 9, dans lequel la première pièce polaire statorique (74) est placée sur une carte de circuits imprimés (34) sur laquelle un capteur galvanomagnétique (35) est disposé au voisinage d'une face terminale de l'aimant de rotor (62) prévu sur la cloche de rotor (52).

11. Moteur à pôles à griffes selon la revendication 10, dans lequel le capteur galvanomagnétique (35) est disposé dans un évidement (37) de la carte de circuits imprimés (34).

12. Moteur à pôles à griffes selon la revendication 10 ou 11, dans lequel le capteur (35) est décalé radialement en direction de l'axe de rotation du moteur par rapport à la face terminale de l'aimant de rotor (62).

13. Moteur à pôles à griffes selon une ou plusieurs des revendications 10 à 12, dans lequel la face terminale de l'aimant de rotor (62) tournée vers le capteur galvanomagnétique (35) est séparée du capteur galvanomagnétique (35) par un entrefer axial (134) qui forme au moins une partie du décalage axial entre le stator (64 ; 64') et le rotor (42).

14. Moteur à pôles à griffes selon une ou plusieurs des revendications 9 à 13, dans lequel l'extension axiale (HR) de l'aimant de rotor (62) coïncide pour l'essentiel avec l'extension axiale (HS) du stator (64; 64').

15. Moteur à pôles à griffes selon une ou plusieurs des revendications 9 à 14, dans lequel le palier axial est réalisé sous la forme d'un palier lisse entre une extrémité libre (44) de l'arbre (40) et une pièce (28) liée au stator.

16. Moteur à pôles à griffes selon une ou plusieurs des revendications précédentes, réalisé sous la forme d'un micromoteur.

17. Utilisation d'un moteur à pôles à griffes selon une ou plusieurs des revendications précédentes pour l'entraînement d'un ventilateur (22).

18. Utilisation d'un moteur à pôles à griffes selon la revendication 17, le ventilateur étant un ventilateur de processeur (22).
